# EUROPEAN PATENT APPLICATION

(11) **EP 1 428 675 A2**
(43) Date of publication of application: **16.06.2004**
(21) Application number: 03255718.3
(22) Date of filing: 12.09.2003
(51) Int. Cl.: B41M 5/00, B41M 7/00

(54) **Method of improving lamination quality by treating media with plasma**

(30) Priority: 24.09.2002 US 254302
(71) Applicant: Hewlett-Packard Development Company, L.P., Houston, TX 77070 (US)
(72) Inventor: Tran, Hai Q., San Diego, CA 92127 (US); Askeland, Roland A., San Diego, CA 92129 (US)
(74) Representative: Jackson, Richard Eric

(57) **Abstract**

A method of improving lamination consistency across a media substrate is provided. The method includes providing a media substrate having at least one ink-receptive (unprinted) surface and subjecting the ink-receptive surface to plasma treatment to create at least one treated surface of the media substrate. The plasma treatment may be any of various electrical discharge treatments known to those of skill in the art including, but not limited to, corona discharge treatment, plasma ashing techniques, electromagnetic irradiation and the like. Subsequent to plasma treatment, the media substrate may be printed and laminated, as desired. The method provides more consistent adhesion of laminate materials across various regions of the media substrate.

## Description

### FIELD OF THE INVENTION

The present invention relates generally to surface treatments and, more particularly, to methods of treating surfaces with plasma. More specifically, the present invention relates to methods of improving lamination quality by subjecting an ink-receptive media substrate surface to plasma treatment prior to printing.

### BACKGROUND OF THE INVENTION

It is well known that consistent adhesion of laminate materials across a fully or partially printed surface of a media substrate is difficult to achieve. Printed media which are laminated subsequent to printing often suffer from reduced adhesion across certain regions of the substrate surface (*e.g.*, the center region) relative to other surface regions (*e.g.*, the edge regions of the substrate surface). This is primarily due to differences in the adhesive and wetting characteristics of the ink-bearing and non-ink-bearing portions of the media substrate surface. This difference in adhesive and wetting properties at different portions of the substrate surface typically creates a required waiting period between the time that the surface of the media substrate is printed and the time that the media substrate is subjected to a subsequent finishing process, e.g., lamination. Thus, persons faced with this problem have been forced to, for instance, change the lamination process or media being utilized, increase the temperature and/or pressure of the lamination process, or simply wait between process applications for the adhesive and wetting characteristics to become more stable or compatible (*e.g.*, wait for the print ink to dry). All of these solutions, however, affect cost and throughput of the overall process.

Accordingly, various surface treatments have been developed to improve the adhesion and wetting properties of the target substrate. As generally understood in the art, a surface treatment may be any method of treating the surface of a substrate which renders the surface more receptive to adhesives or to other surfaces in laminating processes. One such surface treatment that has been utilized is electrical discharge. Treating the surface of a substrate with electrical discharge may render the surface more receptive to inks, dyes, adhesives and the like. In particular, plasma treatments (*e.g.*, ashing, corona discharge, glow discharge, arc discharge, etc.) are known to improve the adhesion and wetting characteristics of thermoplastic materials such as polyolefins.

In particular, the use of corona discharge is well-known in the art for preparing thermoplastic materials, *e.g.*, polyolefin surfaces, and for preparing laminated plastic films for improved adhesion. Depending upon the position of the layer in the laminate film product, either one or both sides of each polyolefin layer may be subjected to corona treatment to improve the adhesion of the layers to one another.

A second corona discharge process for preparing substrate surfaces for improved adhesion is a process for treating a surface of a dielectric substrate with corona discharge so that a flowable material may be applied to, and permanently affixed to, the surface. In the process , the surface of the substrate is not degraded to any significant extent but merely temporarily charged to promote increased adhesion and wettability.

Accordingly, a method of treating an ink-receptive media substrate surface to improve adhesion and wettability thereof, wherein the improved adhesive and wetting properties are not substantially reduced or eliminated upon printing would be advantageous.

### BRIEF SUMMARY OF THE INVENTION

In accordance with the present invention, methods of improving lamination quality by subjecting a media substrate to be printed to plasma surface treatment prior to printing are disclosed. The methods provide more consistent adhesion of laminate materials across various regions of a media substrate.

In one embodiment, a method of modifying adhesion of a media substrate having at least one ink-receptive (unprinted) surface is provided. Such method, according to the present invention, comprises subjecting the ink-receptive surface to plasma treatment. The ink-receptive surface, as provided, has a first surface topography. The plasma treatment may alter the first surface topography to create a second surface topography with modified adhesion.

In another embodiment, a method of improving lamination consistency across a surface of a media substrate having at least one ink-receptive surface with a primary surface topography is provided. Such method, according to the present invention, comprises altering the primary surface topography to create an altered surface topography, printing the ink-receptive surface and laminating the media substrate.

In yet another embodiment, a method of improving lamination quality in a media substrate having at least one ink-receptive surface is provided. Such method, according to the present invention, comprises directing the ink-receptive surface through a plasma discharge a sufficient number of times to apply energy to the ink-receptive surface of about 1.0-15.0 kJ/cm² to create a treated media substrate, printing the ink-receptive surface and laminating the treated media substrate. Other features and advantages of the present invention will become apparent to those of ordinary skill in the art through a consideration of the ensuing description, the accompanying drawings and the appended claims.

### BRIEF DESCRIPTION OF THE SEVERAL VIEWS OF THE DRAWINGS

While the specification concludes with claims particularly pointing out and distinctly claiming that which is regarded as the present invention, the present invention can be more readily ascertained from the following description of the invention when read in conjunction with the accompanying drawings in which:
FIG. 1 is a scanning electron microscopy (SEM) micrograph showing the surface topography of a media substrate prior to plasma surface treatment according to a method of an embodiment of the present invention; and
FIG. 2 is an SEM micrograph showing the surface topography of the same media substrate as that of FIG. 1 subsequent to plasma surface treatment according to a method of an embodiment of the present invention.

### DETAILED DESCRIPTION OF THE INVENTION

The present invention is directed to a method of improving the lamination quality of printed media. More specifically, a method of pretreating an ink-receptive media substrate surface with plasma treatment prior to printing and/or laminating the same is provided. The particular embodiments described herein are intended in all respects to be illustrative rather than restrictive. Alternative embodiments will become apparent to those skilled in the art to which the present invention pertains without departing from its scope.

The method of the present invention comprises providing a media substrate having at least one ink-receptive surface on which an image is to be printed. As used herein, the term "media substrate" refers to any type of suitable sheet material, *e.g.*, letter quality paper, card stock, photographic print stock, and the like. It will be understood that three-dimensional substrates may also be utilized with the method of the present invention provided that the printing and laminating processes used are capable of being performed on such media.

In a particular embodiment, a surface of the media substrate is subjected to plasma treatment under process conditions sufficient to alter the surface topography of the substrate. Exemplary process conditions are more fully described below. "Plasma treatment", as that term is used herein, may refer to any of various electrical discharge treatments known in the art including, but not limited to, corona discharge, plasma ashing techniques and irradiation by intense ultraviolet or other electromagnetic radiation. The following description specifically refers to corona discharge treatment. It will be understood, however, that such is merely for ease of description and other known methods of plasma treatment, such as those listed above, may be equally effective in rendering ink-receptive surfaces of media substrates more receptive to consistent lamination. Such alternatives are contemplated to be within the scope of the present invention.

Any novel or conventional tool may be used to provide the plasma treatment according to the present invention. An exemplary plasma treatment is corona discharge. "Corona discharge", as used herein, refers to a luminous discharge that occurs when an applied voltage between an electrode and a counter-electrode causes partial ionization of the surrounding gas. Typically, corona discharge processes are performed in air at ambient atmospheric pressure and voltage is applied until a threshold value for electrical breakdown of the air between the electrodes is exceeded. As a result, the air is ionized and becomes plasma.

When voltage is applied at a high frequency, a continuous discharge may be obtained. Subsequently, if a suitable material, e.g., a media substrate, is passed through the discharge, the surface thereof which is positioned to face the discharge will be subject to electrical bombardment. Consequently, the surface tension of the surface will temporarily increase. The resultant surface is unchanged to the naked eye but is more receptive to inks, coatings, adhesives, and the like.

As stated, the increased surface tension upon a single pass through a corona discharge is temporary. As such, once the media substrate is subjected to a finishing process such as printing, the charge on the surface will be substantially reduced or eliminated. In order to provide a surface which will maintain an increased surface tension subsequent to printing processes and the like, the method of the present invention comprises subjecting the surface to multiple passes(or a single pass at an elevated energy level) through the corona discharge, or other plasma treatment, under process conditions sufficient to alter the surface topography of the media substrate. That is, the surface of the media substrate is not merely charged, but rather the topography thereof is altered permitting the increased surface tension to subsist after printing. Further, the surface will be "roughened" (as shown in FIG, 2). That is, a monolayer of the media substrate surface will be etched away upon treatment according to the methods of the present invention creating a roughened surface which also subsists after printing. This, in turn, will lead to improved laminate adhesion, as more fully described below, due to the increased surface area provided by the roughened surface.

Exemplary process conditions which are sufficient to cause a physical modification, chemical degradation or other alteration to the surface of the media substrate using corona discharge are as follows: A corona power of between 0.20 and 0.25 kW may be provided. The media substrate may be passed through the corona discharge at least 15 times, generally between 18 and 22 times. The total time for treatment of a media substrate may be approximately ten seconds and may provide a total energy to the media substrate surface of between 2.0 and 2.5 kJ. In one preferred embodiment, improved lamination qualities have been obtained by treating media substrate surfaces with plasma discharge energy of from about 1.0 to about 15.0 kJ/cm². All process conditions may be set on the corona discharge equipment utilized according to the manufacturer's protocol, as is known in the art.

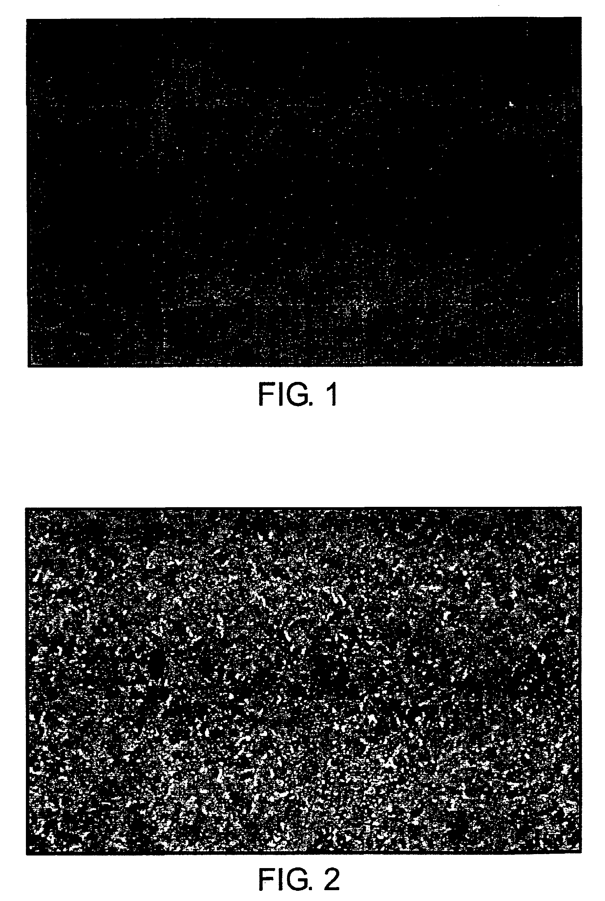

Referring to FIGs. 1 and 2, the surface topography of a media substrate is shown before and after plasma treatment thereof in accordance with the process conditions of the present invention. As is evident, there is a significant change in the surface topography and, thus, it may be concluded that the surface is not merely charged but actually encounters a physical modification, chemical degradation or other such alteration.

Subsequent to plasma treatment, in accordance with the process conditions of the present invention, an image may be printed on the surface of the media substrate which was plasma-treated. The term "image", as used herein, refers to images formed on a media substrate surface (*e.g.*, text, pictures, photographs, charts, etc.) with any dry or liquid colorant known to those of skill in the art, such as a black or color colorant. The image may be printed by any suitable printing device including, but not limited to, laser printers, ink-jet printers, video printers, facsimile machines, photocopiers, and the like. It will be understood by those of skill in the art that printing devices other than those listed herein may be utilized without departing from the scope of the present invention.

After printing, the media substrate may be laminated using any laminate material and adhesive known to those of skill in the art. Suitable laminate materials include, by way of example and not limitation, polypropylene, polyester films and nylon. Because the surface of the media substrate was altered by the plasma treatment and not merely charged, the increased surface tension and roughened surface survive the printing process and improve adhesion of the laminate to the ink-bearing and non-ink-bearing areas of the media. The result is a laminated media substrate having improved lamination quality, namely lamination consistency, across all regions thereof.

The plasma treatment, printing and lamination processes of the present invention may be performed in line with one another or each process may be performed at substantially different points in time. As there is a change in the surface properties of the media substrate, the substrate may be treated and stored until printing and lamination thereof is desired.

In another embodiment, the media substrate may be printed and, subsequently, the ink-receptive surface thereof may be subjected to plasma treatment under the above-described process conditions prior to lamination. Such process may be desirable for high volume application. This alternative is contemplated to be within the scope of the present invention.

The invention is further explained by the use of the following illustrative examples:

### EXAMPLES

### Example I

### Treatment of Media with Corona Discharge

To test the effect of plasma treatment on lamination quality, a photographic media substrate was subjected to corona discharge treatment prior to printing a photographic image thereon. The corona discharge was provided by a curtain corona product manufactured by Corotec Corporation of Farmington, Connecticut. As such, the equipment was complementary to the media-roll utilized. Curtain corona products, like the product utilized herein, supply a stationary curtain of corona through which the media to be treated is directed via transfer rollers. The transfer rollers may be set at various speeds, according to the manufacturer's protocol, to satisfy the needs of a particular application. One skilled in the art will be familiar with such equipment and, thus, the operation of such will not be further described herein.

The corona discharge power was set to 0.22 kW, according to the manufacturer's protocol, and the media substrate was passed through the curtain of corona. Once the sheet had passed through the machine in its entirety, the process was repeated nineteen more times. Thus, the media substrate surface underwent a total of twenty passes through the corona discharge curtain. This process took approximately ten seconds and provided a total energy of about 2.2 kJ.

### Example II

Printing and Laminating the Treated Media and Control Media

The surface of the media substrate treated with corona discharge according to the process described in Example I was printed with a photographic image using a calibrated prototype inkjet printer. For comparison sake, a control media substantially identical to that treated as described in Example I that had not been corona-discharge treated was printed with a substantially identical photographic image, and according to a substantially identical printing process, as the treated media. Subsequently, both the treated media and the control media were laminated. Standard printing and lamination processes as used herein are well known in the art and will not be further described.

### Example III

### Monitoring Lamination Quality

Lamination quality of both the treated and control media was tested over three evaluation periods: at five minutes post-lamination; at one hour post-lamination; and at twenty hours post-lamination. Quality was tested using the peel-strength test. Each media sheet was tested in three separate regions: the center one-third; the right one-third; and the left one-third.

At twenty hours post-lamination, a clear difference in lamination quality was observed. The treated media showed improved adhesion in all of the tested regions relative to the control media. Further, adhesion of the laminate to the treated media was substantially consistent across all regions. The control media, however, showed inconsistent adhesion with the right one-third and the left one-third having greater adhesive properties than the center one-third.

If the surface topography of the media had not been altered by the plasma treatment but merely charged, the charge would have been eliminated upon subjecting the media to the printing process. However, as the above results indicate, the media treated according to the method of the present invention showed improved adhesion of the laminate material relative to the control media. This improvement occurred despite the treated media having been subjected to printing subsequent to plasma treatment and prior to lamination. As such, there was clearly a change in the surface topography of the media upon corona discharge treatment. This indicates that a physical or chemical modification takes place upon plasma treatment according to the processes of the present invention and that the surface of the media substrate is not merely charged.

As will be understood and appreciated by those of skill in the relevant art, many alternatives may be utilized with the processes described herein without departing from the scope of the present invention. For instance, while certain embodiments of the invention have been described with reference to a curtain corona machine, where the media itself is directed through the corona discharge and the position of the corona discharge head(s) is typically not modified throughout treatment, other mechanisms of depositing a corona discharge are envisioned. For example, a corona discharge tool wherein the discharge head(s) is moved rather than the media may also be used in the method of the present invention. Further, while only the surface on which a photographic image was to be printed was subjected to the corona discharge treatment in the embodiments described herein, it will be understood that if more than one surface of a media is to be printed, a similar treatment may be employed on each such surface. Such alternatives are contemplated to be within the scope hereof.

In conclusion, the present invention is directed to methods of preparing ink-receptive media substrate surfaces by subjecting such surfaces to plasma treatment. Utilizing the methods of the present invention, the skilled practitioner will be able to treat media substrates independent of the printing system. Ink-receptive media substrates may be treated with plasma treatment and then stored until such time as one desires to print an image thereon. That is, the media substrates need not be printed immediately upon plasma treatment, as there is a change in the surface topography of the substrate that will maintain over time. This can reduce the cost and complexity of printing and lamination processes and offers increased flexibility regarding the overall requirements of the printing, lamination, ink and media. Further, the wait-time between printing and lamination will be substantially reduced, if not eliminated.

Having set forth preferred embodiments of the invention, it is anticipated that suitable modifications may be made thereto by individuals skilled in the art which nonetheless remain within the scope of the invention. For example, the invention shall not be limited to any particular plasma treatment, printing or lamination technology, ink, or adhesive. In this regard, the present invention shall only be construed in accordance with the following claims.

## Claims

1. A method of modifying adhesion of a substrate, comprising:
providing a media substrate having at least one ink-receptive surface, said ink-receptive surface having a first surface topography; and
subjecting said ink-receptive surface to plasma treatment, wherein said plasma treatment alters said first surface topography and creates a second surface topography, said second surface topography having modified adhesion relative to said first surface topography.

2. A method of improving lamination consistency across a surface of a media substrate, comprising:
providing said media substrate, said media substrate having at least one ink-receptive surface having a primary surface topography;
altering said primary surface topography to create an altered surface topography;
printing said ink-receptive surface; and
laminating said media substrate.

3. The method of claim 1, further comprising printing said ink-receptive surface subsequent to subjecting said ink-receptive surface to plasma treatment.

4. The method of claim 3, further comprising laminating said media substrate subsequent to printing said ink-receptive surface.

5. The method of claim 1, further comprising printing said ink-receptive surface prior to subjecting said surface to plasma treatment.

6. The method of claim 4, further comprising laminating said media substrate subsequent to subjecting said surface to plasma treatment.

7. The method of claim 2, wherein said ink-receptive surface is printed subsequent to altering said primary surface topography.

8. The method of claim 2, wherein said ink-receptive surface is printed prior to altering said primary surface topography.

9. A method of improving lamination quality comprising:
providing a media substrate having at least one ink-receptive surface;
subjecting said ink-receptive surface of said media substrate to a plasma discharge energy of about 1.0-15.0 kJ/cm² to create a treated media substrate;
printing said ink-receptive surface; and
laminating said treated media substrate.

10. A media substrate treated according to any of claims 1-9.
